# FASCICULE DE BREVET EUROPEEN

(11) **EP 2 145 409 B1**
(45) Date de publication et mention de la délivrance du brevet: **05.03.2014**
(21) Numéro de dépôt: 08750048.4
(22) Date de dépôt: 05.05.2008
(51) Int. Cl.: H04B 10/112, H04B 10/114

(54) **PROCEDE ET DISPOSITIF DE LOCALISATION DE SOURCE DE COMMUNICATION ET SYSTEME DE COMMUNICATION MOBILE UTILISANT UN TEL DISPOSITIF**
VERFAHREN UND VORRICHTUNG ZUR ORTUNG EINER KOMMUNIKATIONSQUELLE UND MOBILES KOMMUNIKATIONSSYSTEM MIT SOLCH EINER VORRICHTUNG
METHOD AND DEVICE FOR LOCATING A COMMUNICATION SOURCE AND MOBILE COMMUNICATION SYSTEM USING ONE SUCH DEVICE

(30) Priorité: 10.05.2007 FR 0754970
(43) Date de publication de la demande: 20.01.2010
(73) Titulaire: Tiraby, Christophe, 92330 Sceaux (FR)
(72) Inventeur: Tiraby, Christophe, 92330 Sceaux (FR)
(74) Mandataire: Gevers France
(86) Numéro de dépôt international: PCT/EP2008/055488
(87) Numéro de publication internationale: WO 2008/141914

(56) Documents cités:
- EP-A- 1 429 479
- WO-A-2007/032276
- US-B1- 6 525 854

## Description

La présente invention concerne un procédé de localisation d'une source de communication mobile et un dispositif de localisation d'une source de communication. Elle trouve application pour un système de communication mobile qui utilise au moins un tel dispositif.

Dans l'état de la technique, il est déjà connu d'utiliser une source infrarouge pour communiquer des informations numériques entre deux dispositifs communiquant par exemple dans un système de communication mobile. Par exemple, il est connu d'utiliser des rayons infrarouges pour détecter la position d'un mobile qui emporte des capteurs de détection du rayonnement infrarouge. Il est aussi connu d'utiliser une source de rayons infrarouge pour échanger des informations de commande ou autres entre un premier dispositif et un second dispositif ou plus.

Le problème de la localisation d'une source de communication est particulièrement aiguë dans le cas d'une flotte de robots coopératifs, comme des poissons artificiels, et qui échangent des informations numériques à l'aide de canaux de communication infrarouge. Dans un tel système de communication, les différents robots produisent et reçoivent de telles informations, mais aussi une ou plusieurs balises sont prévues de manière à former par exemple des relais d'information avec un dispositif de contrôle central de la flotte de robots coopératifs.

L'invention utilise le dispositif de localisation au moins sur un robot de manière à lui permettre de déterminer la localisation d'au moins une source de communication avec laquelle il se trouve en relation à un instant donné.

Dans l'état de la technique, il a été développé dans le cadre d'une norme internationale irDa des composants de communication ainsi qu'un protocole de communication utilisant les ondes infrarouges. Il existe donc des dispositifs transcodeurs leur permettant d'effectuer des transmissions de données bidirectionnelles et qui présente les caractéristiques suivantes :
-- la transmission est relativement directive, c'est-à-dire qu'elle se fait en portée optique ;
-- les dispositifs transcodeurs présentent un faible coût ;
-- ils ont une bonne immunité à la lumière du jour ;
-- ils permettent un débit de données important ;
-- ils ont une faible consommation électrique ; et
-- leur partie de réception est d'une sensibilité déterminée et dotée d'un moyen produisant un signal de détection de type booléen selon que la puissance qu'ils ont reçue est supérieure ou non à leur sensibilité.

Le document WO 2007/032276 A1 divulgue un système de localisation d'une source de rayonnement optique.

Cependant, de tels transcodeurs ne permettent pas de réaliser directement une localisation de la source avec laquelle ils échangent des données principalement parce que, du fait de leur directivité, ces transcodeurs supposent toujours que la source avec laquelle ils travaillent se trouve dans la zone angulaire de meilleure réception telle qu'elle est connue et définie. De plus, du fait de leur sensibilité élevée, ils sont plus susceptibles d'être aveuglés par des sources de rayons infrarouges dont la puissance serait trop importante et qui empêcherait une détection correcte du secteur angulaire dans lequel l'émetteur se trouverait.

L'invention apporte remède à cet état de la technique. En effet, elle concerne un procédé de localisation d'une source de rayonnement optique du genre dans lequel on utilise des récepteurs fonctionnant en tout ou rien comme des récepteurs infrarouge. Le procédé se caractérise en ce qu'il consiste :
- à disposer au moins un récepteur de rayonnement optique en un point dont on cherche à localiser la position, les récepteurs étant disposés de façon à discriminer des zones distinctes de l'espace dans lequel se trouve au moins un émetteur déterminé d'un rayonnement optique ;
- à piloter l'émission dudit émetteur de façon à produire une récurrence d'impulsions de puissances d'émission déterminées ;
- à localiser le point associé au récepteur en détectant l'état du récepteur ou des récepteurs en réponse à ladite récurrence d'impulsion de puissances déterminées.

Selon un aspect de l'invention, le procédé consiste en ce que l'émission de la source de localisation est modulée selon une loi de puissances décroissantes déterminée et en ce que la localisation est déterminée sur la base de l'état du ou des récepteurs qui réagissent à la puissance la plus faible reçue.

L'invention concerne aussi un dispositif de localisation du genre qui comporte une pluralité de détecteurs d'ondes infrarouge fonctionnant en tout ou rien, chaque détecteur étant inséré dans un support absorbant des ondes infrarouge laissant passer les rayonnements infrarouges provenant de sources possibles de communication depuis un secteur géométrique déterminé. Le dispositif comporte un moyen à l'entrée duquel sont fournis les signaux des détecteurs mis en forme, pour déterminer le canal du ou des récepteurs placés en regard d'au moins une source de communications produisant une récurrence d'impulsions et/ou de trames de puissances déterminées produites par ladite source de communications déterminée.

Selon un autre aspect de l'invention, le dispositif présente une répartition de plusieurs récepteurs dans des zones séparées par des parois de façon à localiser la source de communications émettrice dans une zone de l'espace, la variation de puissance de l'émetteur étant déterminée pour produire un facteur de contraste.

Selon un autre aspect de l'invention, le dispositif comporte un moyen pour exécuter un calibrage associé au décodage qui coopère avec un moyen pour estimer la distance/proximité entre émetteur d'une source de communication et un récepteur.

Selon un autre aspect de l'invention, le dispositif comporte un moyen pour détecter un obstacle qui coopère avec un moyen pour produire une onde d'interrogation et un moyen pour localiser l'onde d'interrogation ou la réflexion de ladite onde d'interrogation par ledit obstacle.

Selon un autre aspect de l'invention, le dispositif présente un positionnement de l'émetteur et du récepteur sur le même robot communicant mobile avec séparation par une cloison de façon à permettre de détecter le reflet de l'émission et d'estimer la puissance de ce reflet.

Selon un autre aspect de l'invention, le dispositif comporte un circuit de détection dont les bornes d'entrée sont connectées électriquement aux différents capteurs, des moyens de mise en forme des signaux électriques reçus de chaque capteur qui sont connectés à des moyens pour détecter le canal du capteur placé en regard d'au moins une source de communications et en ce que des identifiants du canal détecté sont alors transmis en sortie du circuit de détection à un circuit pour mémoriser les identifiants du secteur dans lequel la source de communication a été détectée par le canal détecté.

Selon un autre aspect de l'invention, le canal du capteur placé en regard d'une source de communication est détecté sur la base de la puissance la plus faible détectée et sur la base d'au moins une source de communication produisant une récurrence d'impulsions et/ou de trames d'énergie rayonnée selon une énergie décroissante selon une loi de décroissance déterminée.

Selon un autre aspect de l'invention, la loi de décroissance est de type exponentielle, chaque trame présentant une amplitude déterminée pendant une durée déterminée, et est séparée de la trame suivante d'une durée déterminée.

Selon un autre aspect de l'invention, la source de communication adaptée à un dispositif de localisation comporte un micro contrôleur qui comporte un moyen d'exécution d'un programme pour générer une séquence d'instructions capables d'activer un premier port de sortie du micro contrôleur pour contrôler le fonctionnement d'un interrupteur actif, et un second groupe de ports de sortie qui sont connectés à un réseau de résistances, calculé de manière à produire une amplitude de trame selon une loi de décroissance exponentielle. Le point commun du réseau est connecté à l'anode d'une diode émettrice d'une onde infrarouge dont la cathode est connectée à l'électrode de drain du l'interrupteur dont l'électrode de source est connectée à la masse électrique et l'électrode de grille est connectée au port de sortie du micro contrôleur. Les résistances sont connectées chacune à un port de sortie déterminé du groupe de ports de sortie du micro contrôleur tandis que la résistance est connectée à plusieurs ports de sortie déterminés du groupe de ports de sortie de manière à bénéficier d'une capacité de courant supplémentaire par rapport aux autres résistances.

Selon un autre aspect de l'invention, le dispositif coopère avec un dispositif de communication et des moyens de communication infrarouge bidirectionnelle, le dispositif de communication comportant un micro contrôleur et d'un circuit d'interfaçage qui est connecté par une voie sortante du micro contrôleur à un port d'émission série asynchrone TX du micro contrôleur et par une voie entrante du micro contrôleur à un port de réception série asynchrone RX une ligne commune de réception étant montée en collecteur ouvert avec la sortie de réception de chacun des modules récepteurs-émetteurs transmise à cette ligne par un circuit d'adaptation de type « buffer » en collecteur ouvert.

L'invention concerne enfin un système de communication mobile caractérisé en ce qu'il comporte une pluralité de robots communicants mobiles, dont au moins un est équipé d'un dispositif de localisation selon l'invention.

D'autres caractéristiques et avantages de la présente invention seront mieux compris à l'aide de la description et des dessins parmi lesquels :
-- les figures 1(a) à 1(c) représentent des schémas de deux modes particuliers de réalisation d'un dispositif de l'invention ;
-- la figure 2 représente un schéma d'une partie d'un circuit inclus dans le dispositif de localisation de la figure 1 ;
-- les figures 3(a) à 3(c) représentent des chronogrammes mis en oeuvre dans une source de communication adaptée à un dispositif de localisation selon l'invention dans deux situations de réception;
-- les figures 4(a) et 4(b) représentent un schéma d'une partie d'un circuit électronique inclus dans la source de communication mettant en oeuvre le chronogramme de la figure 3(a) ;
-- la figure 5 représente un schéma d'une partie d'un circuit électronique inclus dans un dispositif de localisation selon l'invention ;
-- la figure 6 représente un chronogramme des signaux échangés ou traités par la source de communication et un dispositif de localisation de l'invention ;
-- la figure 7 représente un schéma d'une partie d'un circuit électronique inclus dans un dispositif de localisation de l'invention ;
-- la figure 8 représente des chronogrammes mis en oeuvre dans un autre mode de réalisation du procédé de l'invention ; et.
-- la figure 9 représente un schéma d'une partie d'un circuit électronique inclus dans un dispositif de localisation selon un autre mode de réalisation du procédé de l'invention.

Selon l'invention, la localisation permise par les moyens de l'invention permet selon les circonstances de déterminer :
- la position relative d'un dispositif de localisation relativement à une source de communications directe ou indirecte ;
- la présence d'un obstacle relativement à un dispositif de localisation et/ou de communications ; et
- la distance du dispositif de localisation relativement à une source de communications, directe ou indirecte.

Une source de communication directe comporte au moins un dispositif de communication qui comporte un moyen pour générer au moins un signal de communication d'une puissance déterminée, tandis qu'une source de communication indirecte bénéficie des réflexions produites par ladite puissance déterminée.

On va maintenant décrire la localisation proprement dite selon l'invention.

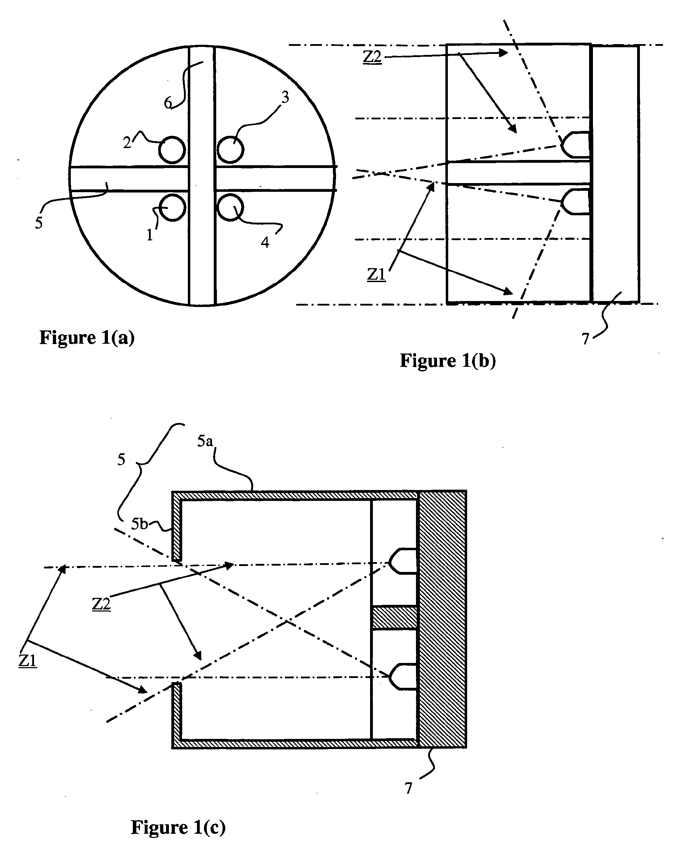

À la figure 1(a), on a représenté le schéma d'un mode particulier de réalisation d'un dispositif de localisation selon l'invention. De façon à localiser la position ou le secteur géographique dans lequel se trouve une source possible de communication, le dispositif de localisation comporte plusieurs capteurs de l'onde optique utilisée par la source de communication. Préférentiellement, on utilise ainsi qu'il a été expliqué ci-dessus une onde infrarouge provenant d'un transmetteur irDa. Chaque capteur 1--4 est disposé sur un support 7 absorbant l'onde optique utilisée et sur lequel sont aussi disposées des cloisons comme les cloisons 5 et 6 de sorte que chaque capteur 1--4 reçoive de l'énergie rayonnée par une source se trouvant dans un secteur de l'espace sensiblement limité par les droites issues du centre du capteur et qui sont interceptés par les bords des cloisons 5 ou 6. Ainsi qu'il est représenté à la figure associée 1(b), l'angle de réception normal du capteur 1 est limité sur le secteur Z1 et celui du capteur 2 est limité sur le secteur Z2. Il en est ainsi pour chaque capteur disposé sur le dispositif de localisation de l'invention.

Particulièrement, selon la nature du rayonnement issue de la source de communication, et selon la géométrie du secteur de détection que l'on veut associer à chaque capteur, la forme et le matériau du support 7 et des cloisons 5 et 6 sont conçues de manière particulière. Notamment, il est possible de rajouter une plaque symétrique du support 7 visible dans la vue de droite (b) de façon à masquer la plus grande partie du rayonnement qui ne se situerait pas dans le plan représenté dans la vue de dessus de la figure 1 (a).

De façon à réaliser un dispositif de localisation à trois dimensions, il est par exemple possible de coupler au dispositif de localisation de la figure 1 un dispositif de localisation identique dont le support est accolé ou adossé au support 7 du dispositif de localisation représenté à la figure 1.

Le nombre de capteurs 1--4 n'est pas limité et il est seulement déterminé par le nombre de secteurs que l'on désire détecter dans le dispositif de localisation de l'invention.

A la figure 1(c) on a représenté une vue en coupe d'un autre mode de réalisation d'un dispositif de localisation utilisé dans l'invention avec une chambre limitant les secteurs de localisation Z1, Z2, ... La chambre est constituée par une paroi cylindrique 5 composée d'une partie axiale 5a fermée à sa partie gauche au dessin par une partie annulaire 5b percée d'une ouverture permettant le passage de l'onde d'éclairement par un émetteur déterminé. Cette disposition peut être combinée avec la disposition de la figure 1(b) comme il a été représenté sans référence à la figure 1(c).

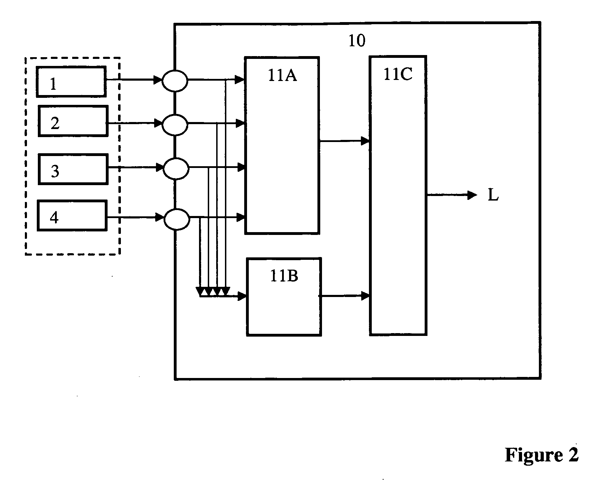

À la figure 2, on a représenté une partie d'un circuit électronique inclus dans le substrat 7 du dispositif de localisation de la figure 1. Le circuit électronique inclus dans le substrat 7 du dispositif de localisation de l'invention comporte un circuit de détection dont les bornes d'entrée sont connectées électriquement aux différents capteurs 1--4 du dispositif de localisation. Le circuit de détection comporte des moyens de mise en forme des signaux électriques reçus de chacun des capteurs. A cette fin, le dispositif de localisation selon l'invention comporte un premier moyen 11A pour déterminer à chaque instant déterminé par une horloge interne au dispositif de localisation 10, l'état de tension électrique de chaque canal d'entrée connecté à un détecteur, récepteur ou capteur associé à un secteur de localisation Z1, Z2, .... Les mêmes signaux sont aussi combinés dans un circuit de combinaison 11 B de façon à ce que dès qu'un détecteur de rayonnement optique reçoit une énergie supérieure à son seuil de sensibilité, il déclenche un signal actif.

Un circuit de localisation proprement dite 11C produit un signal de localisation L en comparant l'état des signaux d'état de chacun des détecteurs exécuté par le circuit 11A avec la présence d'un signal actif produit par le circuit de détection commune ou globale 11B. Le circuit de localisation finale 11C produit un signal actif en relation avec le canal ou les canaux associés à chaque récepteur en regard le plus direct avec la source de communications.

Selon le procédé de l'invention, il est proposé de modifier les sources de communication utilisées dans un système de communication utilisant un dispositif de localisation de sources de communication selon la présente invention. Une telle source de communications doit alors émettre à l'aide d'au moins un dispositif de communications une pluralité de signaux selon des puissances déterminées, et, dans le cas la localisation proprement dite, selon des directions ou zones déterminées.

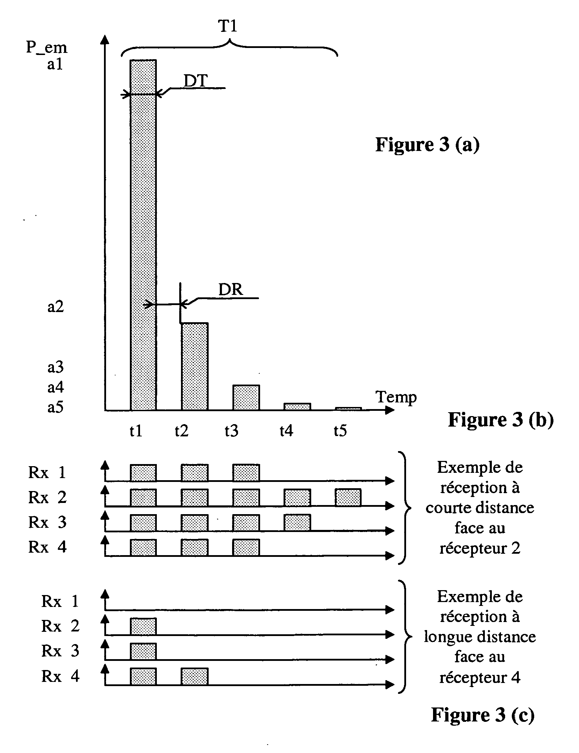

À la figure 3a, on a représenté un chronogramme d'une récurrence T1 de N trames t1, t2, ... d'énergie produites par la source de communication modifiée dans le but de perfectionner la localisation de sources de communication à l'aide du dispositif de localisation de l'invention. Chaque récurrence est composée d'une séquence de N trames dont l'énergie ou la puissance est décroissante selon une loi de décroissance déterminée. Dans un mode particulier de réalisation, la séquence comporte cinq trames et la loi de décroissance est de type exponentielle. Chaque trame ti présente une amplitude ai pendant une durée DT, et est séparée de la trame suivante ti+1 d'une durée DR. Selon les systèmes de communication dans lesquelles l'invention est incorporée, il est possible de régler le nombre N de trames, la loi de décroissance, la durée DT de chaque trame et la durée inactive DR. La séquence est répétée à chaque récurrence T2, T3 ... quand on cherche à localiser au moins une source de communication.

Chaque trame porte au moins un mot de communication permettant ou bien de transmettre une information ou bien de produire une énergie selon le protocole précité. Dans un mode de réalisation, la source de communications intègre un circuit de communication série sous le codage de un bit de démarrage, suivi de 8 bits de données et terminé par un bit d'arrêt. Le mot binaire est ainsi fixé à 10 bits.

Le temps mort DR est en particulier prévu de manière à permettre que le dispositif de localisation puisse acquitter le signal traité (dans les moyens 11A et 11B (Figure 2)).

A la figure 3(b), on a représenté un exemple de réception d'une émission à courte distance face au récepteur ou détecteur du dispositif de localisation. Les signaux d'état produits par le moyen 11A sont respectivement Rx_1 à Rx_4. Le circuit 11C détermine au moins un canal en portée directe avec la source en détectant l'état du canal Rx_i associé au détecteur qui réagit à la puissance émise la plus faible par la source, soit le canal Rx_2 ici.

A la figure 3(c), on a représenté un exemple de réception d'une émission à longue distance face au récepteur ou détecteur du dispositif de localisation. Les signaux d'état produits par le moyen 11 A sont respectivement Rx_1 à Rx_4. Le circuit 11C détermine le canal (ou les canaux) en regard le plus direct avec la source et qui réagissent donc à la puissance émise la plus faible, soit le canal Rx_4 ici.

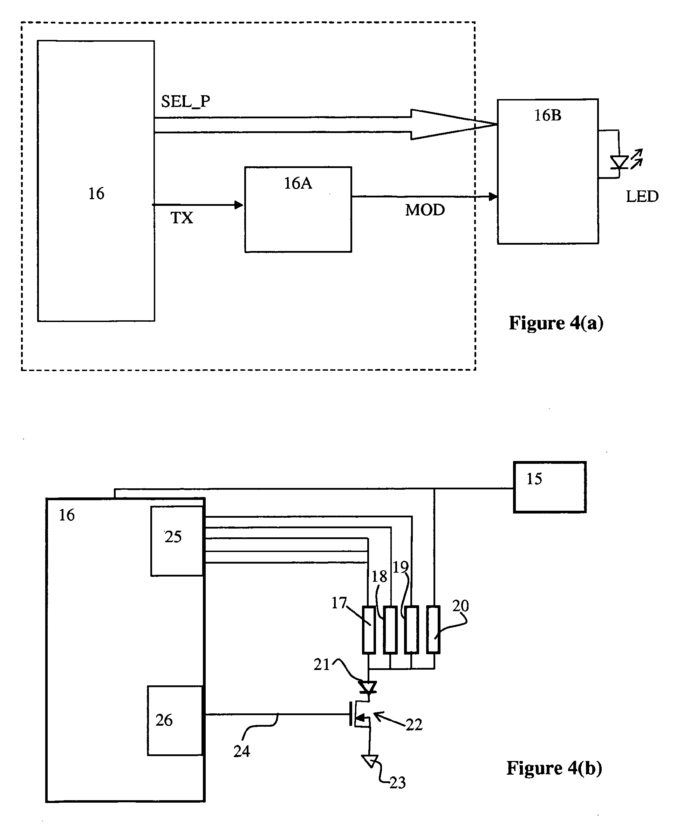

À la figure 4(a), on a représenté une partie d'un circuit électronique intégré à une source de communication destinée à émettre un signal lumineux vers un dispositif de localisation selon l'invention. Le circuit de contrôle 16 associé au dispositif de localisation comporte préférentiellement un microcontrôleur dont un premier dispositif de sortie produit un signal de sélection de puissance d'émission SEL_P et un second dispositif de sortie TX connecté à un circuit d'interface 16A. Dans un mode de réalisation, le circuit d'interface 16A est de type IRDA, les émetteurs de rayonnement optique étant des transducteurs IRDA infrarouge.

Le circuit d'interface 16A produit un signal de modulation pour un circuit de modulation 16B qui reçoit le signal de sélection de puissance SEL_P et le signal de modulation MOD. Au moins une diode infrarouge d'émission LED est connectée en sortie du circuit de modulation d'émission 16B de sorte que la diode LED puisse rayonner une séquence de trames de puissances déterminées selon le procédé décrit à l'aide de la figure 3(a). Dans un mode de réalisation, la puissance d'émission de la source de communication est générée par plusieurs diodes activées en fonction de la puissance de chaque trame décidée selon le procédé de l'invention.

On a représenté à la figure 4(b) un mode particulier de réalisation de circuit électronique qui comporte un micro contrôleur 16 qui reçoit une tension d'alimentation électrique d'un circuit d'alimentation électrique régulé 15. Le micro contrôleur 16 comporte un moyen d'exécution d'un programme pour générer une séquence d'instructions capables d'activer un premier port de sortie 26 du micro contrôleur 16 pour contrôler le fonctionnement d'un interrupteur actif comme un transistor MOS 22, par l'intermédiaire d'un circuit d'adaptation IRDA (déjà expliqué à l'aide de la figure 4(a)), et un second groupe de ports de sortie 25 qui sont connectés à un réseau de résistances 17--20.

Le réseau de résistances 17--20 est calculé de manière à produire une amplitude de trame selon une loi de décroissance exponentielle. Si une autre loi était désirée, le réseau de résistances peut être adapté en conséquence. Le point commun du réseau 17--20 est connecté à l'anode d'une diode émettrice d'une onde infrarouge 21 dont la cathode est connectée à l'électrode de drain du transistor MOS 22 dont l'électrode de source est connectée à la masse électrique 23 et l'électrode de grille 24 est connectée au port de sortie 26 du micro contrôleur 16 par l'intermédiaire du circuit d'interface IRDA 16A.

Les résistances 18--20 sont connectées chacune à un port de sortie déterminé du groupe de ports de sortie 25 du micro contrôleur 16 tandis que la résistance 17 est connectée à plusieurs ports de sortie déterminés du groupe de ports de sortie 25 de manière à bénéficier d'une capacité de courant supplémentaire par rapport aux autres résistance.

Le programme exécuté dans le micro contrôleur produit la séquence de chaque récurrence T1, T2 représentée à la figure 3 en commutant le transistor 22 par le port de sortie 26 et en plaçant chaque port déterminé du groupe de ports de sortie 25 dans un état convenable.

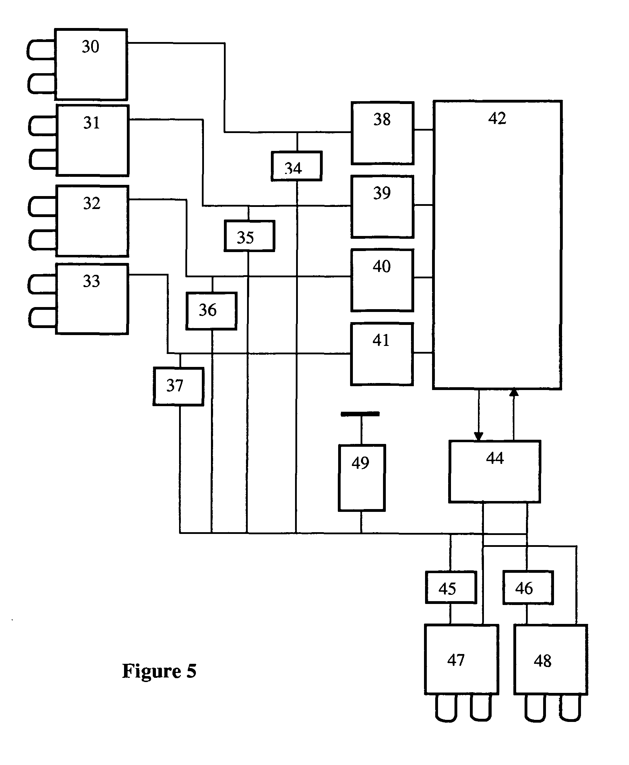

À la figure 5, on a représenté un dispositif appartenant au système de communication, le dispositif de communication comportant un dispositif de localisation 30--33 et des moyens de communication infrarouge bidirectionnelle 47, 48. Préférentiellement, l'ensemble des récepteurs et des émetteurs est des composants de type irDa. Le dispositif de communication représenté à la figure 5 est construit autour d'un micro contrôleur 42 et d'un circuit d'interfaçage IrdA 44 qui est connecté par une voie sortante du micro contrôleur 44 à un port d'émission série asynchrone TX du micro contrôleur et par une voie entrante du micro contrôleur 44 à un port de réception série asynchrone RX. Cette ligne commune de réception IrdA est montée en collecteur ouvert ("open collector"). La sortie de réception de chacun des modules récepteurs--émetteurs de type IrdA est transmise à cette ligne par un circuit d'adaptation 34--37 et 45,46 de type « buffer » en collecteur ouvert ("open collector"). Ainsi, le moyen de combinaison des canaux de réception du dispositif de localisation comporte t'il un OU en logique négative de l'ensemble des signaux reçus par les récepteurs.

De plus, la sortie de chacun des capteurs ou récepteurs IrdA affecté au dispositif de localisation de sources de communication 30--33 est connectée par l'intermédiaire d'un intégrateur 38--41 dont la sortie intégrée est connectée à un port d'entrées convenables du micro contrôleur 42. Chaque intégrateur comporte un circuit d'adaptation de type « buffer » en collecteur ouvert ("open collector") dont la sortie est connectée au point commun d'une résistance de charge portée au potentiel d'alimentation continue du dispositif est un condensateur d'intégration dont l'autre borne est placée à la masse. Le point commun sert de sortie d'intégration à l'intégrateur.

Du fait que la ligne de réception du dispositif de communication de la figure 5 est placée en collecteur ouvert, une résistance de tirage 49 est placée entre l'alimentation continue et la ligne de réception proprement dite.

Il en résulte que le dispositif de communication de la figure 5 comporte un dispositif de localisation et une source de communication qui permettent de mettre en oeuvre l'invention dans le cadre d'une application dans laquelle le dispositif de communication peut être associé à un robot appartenant à une flotte de robots communicants, comme des poissons artificiels entraînés par des actionneurs convenables.

Dans un mode de réalisation de l'invention, des moyens de localisation et de communication selon l'invention sont disposés dans chaque dispositif de communication associé à un robot communicant mobile. Plusieurs robots communicants mobiles sont alors associés dans une flotte de robots communicants mobiles, ensemble complété par une station de commande centrale et le cas échéant par des balises fixes ou mobiles qui sont dotés des mêmes moyens de communication et de localisation que les robots communicants mobiles. Il est possible d'assurer à la fois :
- une communication bidirectionnelle entre les différents robots communicants mobiles et le cas échéant de stations fixes permettant de relayer des communications d'une part ou des commandes permettant d'obtenir un comportement d'ensemble de la flotte des robots communicants mobiles, d'autre part ; et
- une localisation de chacun des robots communicants mobiles qui passe à proximité du robot communicant mobile équipé dudit dispositif de localisation ou d'une balise ou station fixe équipée dudit dispositif de localisation.

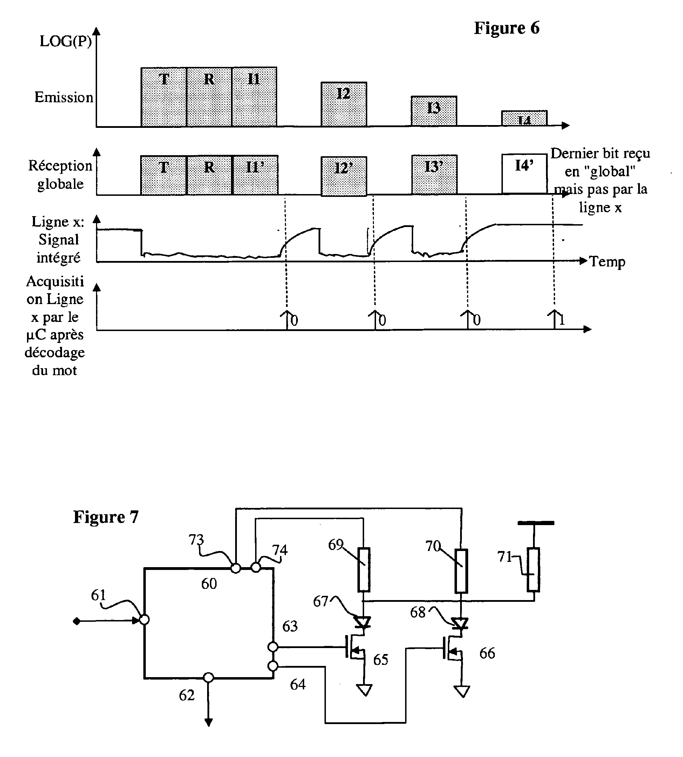

À la figure 6, on a représenté respectivement de haut en bas :
(a) un chronogramme d'émission produit par la source de communication d'un robot communicant mobile équipé du dispositif de communication de la figure 4 ;
(b) un chronogramme de réception globale du dispositif de communication bidirectionnel d'un robot communiquant mobile qui passe à portée optique du dispositif de communication du robot communiquant mobile produisant le chronogramme d'émission indiqué au chronogramme (a) ;
(c) une courbe représentant l'intégration du signal de réception sur la sortie de l'un x des intégrateurs du circuit de la figure 5 du robot recevant une onde de la source de communication constituée par le robot communicant mobile travaillant selon le chronogramme d'émission (a) ; et
(d) un chronogramme de l'acquisition faite par le micro contrôleur 42 du circuit de la figure 5 dans le robot communiquant mobile qui passe à proximité et en portée optique avec la source de communication responsable du chronogramme d'émission (a).

Dans le chronogramme (a) d'émission, une première partie de séquence de trois trames de plus forte amplitude a1 est produite par un moyen pour passer vers les robots destinataires une première information dans laquelle se trouve au moins l'une des informations suivantes :
-- un identifiant numérique de la source de communication produisant le chronogramme (a) d'émission ;
-- un identifiant numérique du dispositif de réception qui est destinataire de la séquence d'émission ;
-- l'indication d'un type de message ; et
-- un drapeau permettant d'indiquer au dispositif de réception si la séquence qui suit, dépend d'une loi de décroissance ainsi qu'il a été exposé dans le cadre de l'invention.

La source de communication est donc équipée d'un moyen permettant de déterminer si la séquence est une séquence de localisation ou si elle est une séquence traditionnelle à puissance déterminé constante.

Particulièrement une séquence de localisation est prévue à la trame T représenté dans le chronogramme (a) pour des dispositifs de communication associés :
-- à un robot communicant mobile prédécesseur,
-- à un obstacle portant une source de communication destinée à produire un indicateur d'obstacle pour les robots communicants mobiles de la flotte de robots communicants mobiles ; ou
-- à un dispositif fixe servant de base de communication, ou de base de rechargement des robots communicants mobiles de la flotte précitée.

La trame R émise contient un indicateur, ici la lettre « R ».

Puis, la séquence de trames de localisation est générée dans la suite de trames I1, 12, I3, I4 d'amplitudes a1, a2, a3, a4 décroissantes décrites précédemment.

Dans le même temps, et avec une amplitude réduite par l'absorption de l'onde produite par la source de communication produisant le chronogramme (a), les mêmes trames successivement T', pour la trame émise T, R' pour la trame émise R, I1' pour la trame émise I1, I2' pour la trame émise 12, 13' pour la trame émise I3 sont reçues respectivement par le dispositif de localisation 30--33 et par le système de communication bidirectionnelle 47,48 de l'un des robots communicants mobiles.

Lorsque le micro contrôleur 42 décode la trame T' et qu'il reconnaît être le destinataire de la source de communication ayant produit chronogramme (a), il effectue l'acquisition des ports d'entrée connectés aux intégrateurs 38--41 de façon à connaître l'état sur la ligne de réception associé au détecteur x représentée sur la courbe (c), un signal qui présente une tension haute, tant qu'aucun signal n'est reçu, puis une tension faible immédiate en cas de réception, cette tension revenant au niveau haut selon la constante de temps déterminée par le condensateur et la résistance de l'intégrateur associé.

Les moyens de décodage de la localisation, implémentés par le micro contrôleur 42 du robot communicant mobile destinataire, permettent alors de produire l'état de réception de la ligne correspondante représenté sur le chronogramme (d), soit l'état « 0 » pour les trois premiers mots et « 1 » pour le dernier, indiquant alors l'absence de réception de cette dernière trame pour la ligne de réception considérée.

En fonction de l'identification du détecteur 30--33 qui est activé par les trames I1', I2', 13' ou I4', il est alors possible de réaliser la localisation de la source de communication qui a produit le chronogramme (a), c'est-à-dire la désignation du secteur géographique, comme les secteurs Z1 ou Z2 de la figure 1, dans lequel se trouve la source de communication qui a produit le chronogramme (a).

Dans un mode particulier de réalisation, le dispositif de communication représenté à la figure 5 comporte aussi un moyen de mesure de distance entre le dispositif de communication, notamment quand il est porté par un robot communicant mobile, et un système de communication d'émission à puissance variable comme décrit dans l'invention. Le robot communicant mobile comporte un dispositif de localisation qui comporte un moyen pour exécuter un calibrage associé au décodage permettant d'estimer la distance/proximité entre émetteur et récepteur. À cet effet, le système de communication émetteur produit une onde infrarouge selon une séquence déterminée du genre de la séquence du chronogramme (a), de sorte que le système de communication récepteur puisse déterminer la puissance minimale reçue par le capteur concerné par la mesure. À cet effet, le micro contrôleur 42 est équipé d'un moyen pour identifier le code identifiant du système de communication émetteur et d'une table dans laquelle sont enregistrées différentes valeurs de distance associées à l'amplitude de la dernière trame reçue. Plus particulièrement, quand le dispositif de localisation travaille sur le moyen de mesure de distance entre un émetteur et un récepteur, le dispositif de localisation active une seule ligne ou canal comportant un récepteur 30, un tampon de mise à la ligne commune 34 et un intégrateur 38 à l'entrée du microcontrôleur 42. La distance entre le récepteur et l'émetteur ou sa réflexion sur un obstacle est indiquée par le niveau de la trame de plus faible puissance reçue sur le récepteur. Selon un autre point de vue, le dispositif de localisation de l'invention comporte un moyen pour exploiter une table dans laquelle sont enregistrés les différentes valeurs de distance associées à l'amplitude de la dernière trame reçue de chacun des obstacles connus dans l'environnement d'évolution. Cette dernière trame reçue correspond à la plus petite puissance reçue par un capteur ou récepteur dont l'identification du canal auquel il appartient permet à la fois une identification de la zone dans laquelle se trouve une source de communications ou un obstacle et une estimation de la distance à laquelle se trouve la source de communications ou obstacle.

Particulièrement, le moyen de mesure de distance comporte aussi un moyen pour réaliser une calibration à certaines étapes prédéterminée du fonctionnement du robot communicant mobile équipé d'un tel moyen de mesure de distance, et particulièrement selon l'ensemble des émetteurs possibles enregistrées dans une table des obstacles possibles avec des caractéristiques de calibration associée à chacun des émetteurs possibles de l'environnement d'évolution de la flotte de robots communicants mobiles équipés du tel moyen de calibration. Selon le contexte et l'environnement, le dispositif de localisation produit une estimation de la distance aussi bien sur un obstacle déterminé dans l'environnement du robot qui le porte que sur un autre robot se trouvant a proximité.

Selon un autre aspect de l'invention, le dispositif de localisation, le système de communication ou le dispositif de communication peuvent être, séparément ou en combinaison, assemblés dans un ou plusieurs modules qui peuvent alors être utilisés séparément dans le cadre d'applications différentes.

Selon un autre aspect de l'invention, l'onde produite par la source de communication est une onde infrarouge, et le milieu dans lequel est transmis l'onde est un milieu liquide comme une piscine, un cours d'eau, un lac ou toute étendue aqueuse. L'invention s'applique aussi quand le milieu d'évolution des robots communicants mobiles est de l'air ou encore un milieu mixte transparent mélangeant liquide et gaz ou encore comportant des séparateurs transparents à l'onde optique utilisée comme des infrarouge, de tels séparateurs étant constitués par exemple par des cloisons transparentes.

Dans un mode de réalisation, un tel dispositif de localisation, avec une telle source de communication et un tel dispositif de localisation a été testé avec un débit de transmission de 9600 bauds, et des récurrences espacées de quelques dixièmes de seconde. Dans un autre essai, on a travaillé avec un débit de 115 200 bauds avec des trames correspondant à un mot de dix bits, une durée de séquence de 870 microsecondes de deux mots suivis de quatre niveaux de puissance et une émission répétée avec une récurrence de 25 Hz.

Dans un autre mode particulier de réalisation, on s'est aperçu que pour réduire les probabilités de collision entre récurrences si plusieurs robots communicants mobiles travaillaient, il fallait implémenter un moyen pour attribuer un espacement différent entre les diverses récurrences produites par les sources de communication sur chacun des robots communicants mobile de la flotte de robots communicants mobiles. Parmi les méthodes pour faire cohabiter plusieurs robots, on utilise :
- la programmation des robots de façon à ce qu'ils présentent des espacements des récurrences tous différents, par exemple {38, 39, 40, 41, ...} exprimés en millisecondes ce qui réduit le nombre de collisions possibles et les écartent temporellement ;
- espacer les récurrences d'une durée pseudo aléatoire ;
- laisser une durée identique entre les récurrences pour tous les robots mais compléter avec un algorithme de détection de trames superposées et décaler le cycle en cas de détection de collision.

Dans un mode particulier de réalisation, pour réaliser un moyen de détection d'obstacle en utilisant des transducteurs IRDA comportant un émetteur et un récepteur infrarouge travaillant alternativement, l'invention propose ainsi qu'il est représenté à la figure 7 une modification du schéma de la figure 5, dans laquelle on intercale un micro contrôleur supplémentaire 60 sur la ligne de transmission série asynchrone Tx entre la sortie du micro contrôleur 42 de la figure 5 et l'entrée correspondante du circuit d'interfaçage IrdA 44.

D'une manière générale, le dispositif de localisation de l'invention présente un positionnement de l'émetteur et du récepteur d'ondes infrarouge sur le même robot communicant mobile avec séparation par une cloison de façon à permettre de détecter le reflet de l'émission et d'estimer la puissance de ce reflet.

Le micro contrôleur 60 comporte un port d'entrée 61 et un premier port de sortie 62. Lorsque le port de sortie série asynchrone Tx du micro contrôleur 42 (figure 5) est activé, le micro contrôleur 60 comporte un moyen pour déterminer le mode de fonctionnement du dispositif de communication implémenté.

Si le mode de fonctionnement est décodé comme étant un type de fonctionnement normal, le contenu du port d'entrée 61 est recopié sur le premier port de sortie 62 qui est connecté à l'entrée du circuit interfaçage IrdA 44 (figure 5). Dans ce cas, le dispositif de communication, doté du moyen de détection d'obstacles de la figure 7 fonctionne comme le dispositif de communication représenté à la figure 5.

Si le mode de fonctionnement est décodé comme étant un type de fonctionnement en détection d'obstacles, le micro contrôleur 60 active alors selon des séquencements prédéterminés par programme une pluralité de ports de sortie, respectivement 63 et 64 connectés aux électrodes de grille respectivement d'un premier transistor MOS 65 et d'un second transistor MOS 66, et 73,74 connectés à une première résistance 69 et à une seconde résistance 70, les interrupteurs 65 et 66 n'étant pas commandés en même temps.

L'autre borne des résistances 69 et 70 est connectée d'une part à une résistance 71 de tirage connectée au potentiel positif de l'alimentation continue du dispositif de communication, et d'autre part à l'anode d'une première diode émettrice infrarouge 65 dirigée selon une première direction, ou à l'anode d'une seconde diode émettrice infrarouge 66 dirigée selon une seconde direction. Il est possible d'augmenter le nombre de directions d'interrogations de présence d'obstacles. Préférentiellement, les anodes des diodes émettrices infrarouges sont connectées au point commun d'alimentation en puissance, qui est alimenté par le moyen de modulation de puissance selon le procédé de l'invention en puissance décroissante.

Lorsque le mode de fonctionnement est un mode de fonctionnement en détection d'obstacle, le port de sortie 62 est désactivé et le port de sortie 63 connecté à la première diode 67 de sorte que une séquence de trames d'interrogation des obstacles dans la première direction soit produite.

Dans un mode particulier de réalisation de l'invention, le microcontrôleur 42 implémente un moyen de décodage de trames de réception qui comporte un moyen pour identifier la source de communication, détecter l'identifiant destinataire et en réponse à la reconnaissance de l'identifiant de réception, un moyen pour activer les ports d'entrée de détection des signaux de localisation.

Les diodes réceptrices du système de localisation 30--33 (figure 5) sont alors analysées et les sorties des intégrateurs transmis à 41 sont interrogées par le moyen de détection d'obstacles intégré au micro contrôleur 42. Si dans chaque récurrence détectée, on trouve l'identifiant émetteur de la source de communication constituée par la diode 65 d'interrogation dans la première direction, et en fonction de la méthode de localisation de source de communication qui est décrite notamment avec des figures 1 à 4, il est alors possible de détecter la présence un obstacle dans ladite première direction.

Lorsque le mode de fonctionnement, détecté par le micro contrôleur 60, active le port de sortie 64, la même séquence d'interrogation est générée par la diode 66 dans la seconde direction et la même analyse que précitée est alors exécutée par le micro contrôleur 42. Dans un mode de réalisation la diode 66 est dirigée vers l'arrière du robot communicant mobile quand la première diode 65 est dirigée vers l'avant. Pour le robot considéré, il est ainsi possible de se faire localiser par au moins un robot communicant mobile qui suit le robot communicant mobile considéré. En augmentant le nombre de robots, on peut ainsi contrôler localement des déplacements ayant une direction de déplacement sensiblement unique pour plusieurs robots communicants mobiles constitués en une ou plusieurs files derrière un robot communicant mobile menant.

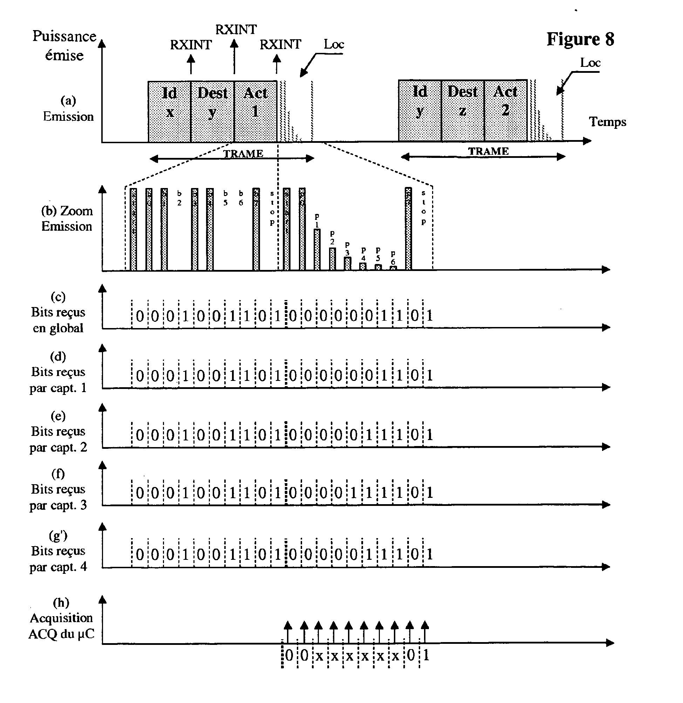

A la figure 8, on a représenté des chronogrammes d'un autre mode de réalisation du procédé de l'invention. Dans cet autre mode de réalisation, la récurrence de trames de puissances déterminées du mode de réalisation des figures 3a à 3c est transformée en une récurrence d'impulsions de puissances déterminées. Préférentiellement, les impulsions de puissances déterminées sont regroupées en mots de localisation insérés dans des trames de communication multimots d'un protocole classique de communication de la façon suivante.

Au moins une trame de la récurrence comporte un mot constitué d'une suite d'impulsions de puissances déterminées par émission d'un dispositif d'émission d'ondes optiques comme des ondes infrarouge. Préférentiellement, la loi de décroissance des puissances de chaque impulsion est exponentielle ainsi qu'il a été expliqué plus haut. On reprend le même principe de génération de l'onde d'interrogation ou de localisation que dans le mode décrit à l'aide des figures 3a à 3c. Puis on reprend le même principe de détection par combinaison logique des canaux détectés sur un récepteur à plusieurs secteurs de détection, chaque secteur de détection de l'onde d'interrogation ou de localisation étant associé à un canal de réception réalisé sur le récepteur.

Dans ce mode de réalisation, le procédé de l'invention consiste, lors d'une étape d'émission d'une onde de localisation ou d'interrogation, à générer au moins un mot de communication dans le protocole de communication, comprenant plusieurs impulsions de puissances décroissantes exponentiellement. Lors d'une étape de localisation, le procédé consiste à rechercher l'identificateur du canal de réception qui reçoit l'impulsion de plus faible puissance.

A la figure 8, le chronogramme (a) représente deux trames de communication successives, chacune comportant des premiers mots de communication, Id, d'identification de l'émetteur, Dest, d'identification du destinataire, Act, d'action à exécuter par le destinataire, et un dernier mot de localisation, Loc. Chaque trame de communication est produite par une source de communication qui produit une onde optique comme une onde infrarouge et qui est destinée à être reçue par une pluralité de récepteurs susceptibles d'assurer la localisation de ladite source de communication. Il est aussi possible que plusieurs des récepteurs soient couplés avec des émetteurs, de sorte qu'une trame qui met en relation un robot d'identificateur Id=x avec un robot d'identificateur Id=y, peut être suivie d'une trame qui met en relation le robot d'identificateur Id=y avec un troisième robot d'identificateur Id=z. Dans un tel cas, au moins le robot d'identificateur Id=y doit comporter un dispositif émetteur de trames et un dispositif récepteur de trames. Selon les circonstances, une flotte de robots peut être équipée de dispositifs émetteur et récepteur, tandis que des balises sont prévues avec des dispositifs simplement émetteurs et d'autres balises sont prévues avec des dispositifs simplement récepteurs.

On note enfin que, dans le mode de réalisation du procédé de la figure 8, chaque dispositif de réception doit comporter un moyen lui permettant de se synchroniser, à l'aide d'une horloge locale, avec les trames reçues de façon à pouvoir anticiper précisément l'établissement des bits du mot de localisation. A cette fin, les récepteurs qui reçoivent des mots de communication Id, Dest et Act se synchronisent sur les impulsions de synchronisation RXINT générées par un dispositif de traitement des mots reçus, qui sera décrit plus loin, celui-ci réagissant de façon déterministe après le décodage des bits de stop de chaque mot de communication reçu.

Au chronogramme (b), on a représenté un agrandissement du mot Act et du mot de localisation Loc de la première trame de communication du chronogramme (a). L'échelle des temps est seule agrandie. Chaque mot binaire, qu'il soit mot de communication ou mot de localisation, est composé, dans ce mode de réalisation et selon le protocole de communication utilisé, de dix positions binaires successivement :
- un bit de démarrage « start »,
- huit bits de message, et
- un bit de fin « stop ».

Pour les premiers mots Id, Dest et Act de chaque trame, chaque bit à « 0 » correspond à la pleine puissance d'émetteur, et chaque bit à « 1 » correspond à une absence de puissance d'émetteur ou une puissance d'émetteur représentative d'un niveau « 0 ».

Pour le mot de localisation Loc, le bit de démarrage « start » est à pleine puissance parce qu'il correspond à un « 0 » et le bit de fin « stop » correspond à une absence de puissance d'émetteur parce qu'il correspond à un « 1 ». Les bits p0 et p7 sont dans le mode de réalisation à pleine puissance afin d'être toujours détectés comme des « 0 » et donc de faciliter la synchronisation des récepteurs. Les bits p1 à p6 compris entre eux sont, par exception au protocole de communication, à des puissances décroissantes selon une loi déterminée comme une loi exponentielle.

Ainsi qu'il a été défini dans le mode de réalisation décrit notamment aux figures 3a à 3c, un dispositif de localisation pour mettre en oeuvre le procédé de l'invention comporte une pluralité de récepteurs de l'onde émise qui sont disposés sur des secteurs de sorte que le récepteur le mieux orienté vers la source d'émission de l'onde émise est sensible à l'impulsion de puissance plus faible que les récepteurs des secteurs ne reçoivent pas. Du fait de la décroissance des puissances du mot de localisation, il est ainsi possible de déterminer :
- l'orientation de la source d'émission et/ou du dispositif récepteur par l'identificateur du canal de détection électronique connecté au récepteur sensible à l'impulsion de puissance la plus faible émise ; et
- la distance par le numéro d'ordre de l'impulsion de la plus forte puissance que reçoit le récepteur déterminé.

Aux chronogrammes (d) à (g) de la figure 8, on a représenté respectivement l'état de détection de chaque canal de détection électronique associé à l'un des quatre récepteurs infrarouges montés sur les quatre secteurs de détection du dispositif. Chaque récepteur infrarouge est disposé dans un secteur plan de 90° dans un exemple de réalisation.

Le canal de détection électronique connecté à chaque récepteur infrarouge est aussi connecté à un opérateur OU en logique négative dont la sortie combine les états de détection des quatre canaux en une ligne de bits reçus en global, représentée au chronogramme (c).

Dans l'exemple de réalisation de la figure 8, on remarque au chronogramme (h) que quelque soit la distance d'un émetteur d'un mot de localisation Loc, le système récepteur quelque soit le nombre de récepteurs infrarouge décodera au moins le bit de start et le bit p0 de puissance maximale sous forme de deux '0', et les deux derniers bits de puissance maximale p7 et de « stop » sous forme d'une paire '01'. Les 6 autres bits (ou positions binaires) sont à des états qui dépendent de l'orientation et de la distance relatives de l'émetteur du mot de localisation et du système récepteur.

Dans le cas où les récepteurs sont des récepteurs infrarouge du standard IrDa, il est connu que la partie active de chaque bit de chaque mot de dix bits ne comporte qu'une fraction de la durée disponible pour transmettre l'un des bits du mot de dix bits, selon la norme irDa, de 3/16 du temps de bit. Il en résulte que la synchronisation doit être effectuée sur la base des tops de réception RXINT des mots de communications précédents dans la trame multimots avant d'ouvrir la détection du mot de localisation.

De même, il est connu que les récepteurs de type IRDA ne produisent pas un signal de sortie de détection de type proportionnel à la puissance de l'onde d'interrogation ou de localisation, mais que seulement si la puissance reçue est supérieure à un seuil de puissance déterminée, le signal de sortie de détection est placé à une valeur « 1 » ou à une valeur « 0 » sinon.

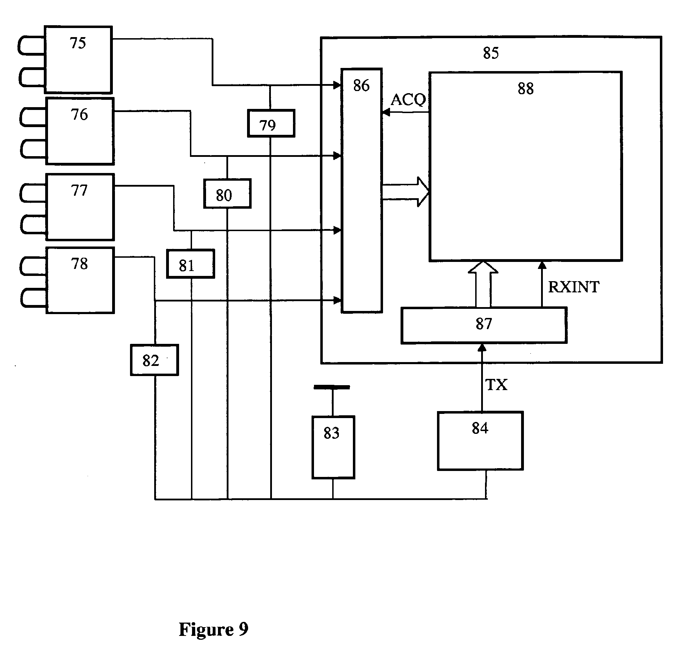

À la figure 9, on a représenté un dispositif de traitement des mots reçus particulièrement adapté au procédé présenté dans le mode de réalisation décrit à la figure 8. Ce dispositif de communication, tout comme le dispositif décrit figure 5 comporte des récepteurs infrarouges 75 - 78, des circuits adaptateurs collecteur ouvert 79 - 82, une résistance de tirage 83, un circuit d'interface IRDA 84 et un microcontrôleur 85.

Pour réaliser la synchronisation du dispositif de traitement des mots reçus de façon à assurer la détection des impulsions dans le mot de localisation, le dispositif de l'invention utilise un dispositif de réception asynchrone 87 de type UART "Universal Asynchronous Receiver Transmitter" intégré au microcontrôleur. Ce dispositif 87 génère un signal RXINT à la fin de la réception de chaque mot de la trame du protocole de communication ce qui permet au module de traitement 88 du microcontrôleur de commander l'acquittement du registre d'entrée 86 par la commande ACQ de façon déterministe. Pour cela, un dispositif logiciel, comme un programme d'interruption déclenché par le signal RXINT, analyse le dernier mot reçu par rapport au contexte de façon à se situer dans la trame du protocole de communication, puis calcule le délai avant l'apparition supposée du bit de "start" du mot Loc. A l'expiration de ce délai, l'acquisition du registre 86 est effectuée, puis répétée en séquences espacée du temps d'intervalle entre bits de façon à faire l'acquisition complète de l'état des récepteurs 75 - 78, pour les bits "start", p0 à p7 et "stop".

Enfin, ainsi qu'il a été décrit ci-dessus, le procédé décrit à l'aide des figures 8 et 9 peut être mis en oeuvre dans une grande variété de dispositifs de localisation et de systèmes de communications mobiles comprenant :
- des platines électroniques regroupant au moins un récepteur infrarouge ou du même genre, et au moins un microcontrôleur pour traiter les signaux de détection d'au moins un canal de détection associé au récepteur et en déduire l'orientation et/ou la distance d'une source produisant au moins une récurrence de trames de puissance de localisation comme des trames réduites à un mot de localisation ;
- des platines électroniques regroupant au moins une source infrarouge ou du même genre activée par un microcontrôleur produisant au moins une récurrence de trames de puissance de localisation comme des trames réduites à un mot de localisation ;
- des platines électroniques regroupant une partie d'émission et une partie de réception adaptées au procédé de localisation de l'invention ;
- des systèmes de communication, fixes ou mobiles, incluant des robots communicants, des balises de localisation, des systèmes de détection d'obstacles, etc.

## Revendications

1. Procédé de localisation d'une source de rayonnement optique dans lequel on utilise des récepteurs fonctionnant en tout ou rien comme des récepteurs infrarouge, **caractérisé en ce qu'**il consiste :
- à disposer au moins un récepteur de rayonnement optique en un point dont on cherche à localiser la position, les récepteurs étant disposés de façon à discriminer des zones distinctes de l'espace dans lequel se trouve au moins un émetteur déterminé d'un rayonnement optique ;
- à piloter l'émission dudit émetteur de façon à produire une récurrence d'impulsions de puissances d'émission déterminées ;
- à localiser le point associé au récepteur en détectant l'état du récepteur ou des récepteurs en réponse à ladite récurrence d'impulsions de puissances déterminées.

2. Procédé selon la revendication 1, **caractérisé en ce que** l'émission de la source de localisation est modulée selon une loi de puissances décroissantes déterminée et **en ce que** la localisation est déterminée sur la base de l'état du ou des récepteurs qui réagissent à la puissance la plus faible reçue.

3. Procédé selon l'une quelconque des revendications 1 ou 2, **caractérisé en ce que** ladite récurrence d'impulsions de puissances déterminées est générée sous forme de trames de puissances déterminées.

4. Procédé selon l'une quelconque des revendications 1 ou 2, **caractérisé en ce que** ladite récurrence d'impulsions de puissances déterminées est générée sous forme d'un mot binaire (Loc) dans une trame multimots (Id, Dest, Act) d'un protocole de communication multitrames.

5. Dispositif de localisation qui comporte une pluralité (1-4) de détecteurs d'ondes infrarouge fonctionnant en tout ou rien, chaque détecteur étant inséré dans un support absorbant des ondes infrarouge laissant passer les rayonnements infrarouges provenant de sources possibles de communication depuis un secteur géométrique déterminé, **caractérisé en ce qu'**il comporte un moyen à l'entrée duquel sont fournis les signaux des détecteurs mis en forme, pour déterminer le canal du ou des récepteurs placés en regard d'au moins une source de communications produisant une récurrence d'impulsions, de puissances déterminées produites par ladite source de communications déterminée.

6. Dispositif selon la revendication 5, **caractérisé en ce qu'**il présente une répartition de plusieurs récepteurs dans des zones séparées par des parois de façon à localiser la source de communications émettrice dans une zone de l'espace, la variation de puissance de l'émetteur étant déterminée pour produire un facteur de contraste.

7. Dispositif selon la revendication 5, **caractérisé en ce qu'**il comporte un moyen pour exécuter un calibrage associé au décodage qui coopère avec un moyen pour estimer la distance/proximité entre émetteur d'une source de communication et un récepteur.

8. Dispositif selon la revendication 5, **caractérisé en ce qu'**il comporte un moyen pour détecter un obstacle qui coopère avec un moyen pour produire une onde d'interrogation et un moyen pour localiser l'onde d'interrogation ou la réflexion de ladite onde d'interrogation par ledit obstacle.

9. Dispositif selon l'une quelconque des revendications 5 à 8, **caractérisé en ce qu'**il présente un positionnement de l'émetteur et du récepteur sur le même robot communicant mobile avec séparation par une cloison de façon à permettre de détecter le reflet de l'émission et d'estimer la puissance de ce reflet.

10. Dispositif selon l'une quelconque des revendications 5 à 9, **caractérisé en ce qu'**il comporte un circuit de détection (10) dont les bornes d'entrée sont connectées électriquement aux différents capteurs (1-4), des moyens de mise en forme des signaux électriques reçus de chaque capteur qui sont connectés à des moyens pour détecter le canal du capteur placé en regard d'au moins une source de communications et **en ce que** des identifiants du canal détecté sont alors transmis en sortie du circuit de détection (10) à un circuit (11) pour mémoriser les identifiants du secteur dans lequel la source de communication a été détectée par le canal détecté.

11. Dispositif selon la revendication 10, **caractérisé en ce que** le canal du capteur placé en regard d'une source de communication est détecté sur la base de la puissance la plus faible détectée et sur la base d'au moins une source de communication produisant une récurrence d'impulsions et ou de trames d'énergie rayonnée selon une énergie décroissante selon une loi de décroissance déterminée.

12. Dispositif selon la revendication 11, **caractérisé en ce que** la loi de décroissance est de type exponentielle, chaque impulsions (pᵢ) et/ou trame (ti) présentant une amplitude déterminée (ai) pendant une durée déterminée (DT), et est séparée de la trame suivante (ti+1) d'une durée déterminée (DR).

13. Dispositif selon la revendication 12, **caractérisé en ce que** la source de communication adaptée à un dispositif de localisation comporte un micro contrôleur (16) qui comporte un moyen d'exécution d'un programme pour générer une séquence d'instructions capables d'activer un premier port de sortie (26) du micro contrôleur (16) pour contrôler le fonctionnement d'un interrupteur actif (22), et un second groupe de ports de sortie (25) qui sont connectés à un réseau de résistances (17-20), calculé de manière à produire une amplitude d'impulsions et/ou de trame selon une loi de décroissance exponentielle et **en ce que** le point commun du réseau (17-20) est connecté à l'anode d'une diode émettrice d'une onde infrarouge (21) dont la cathode est connectée à l'électrode de drain du l'interrupteur (22) dont l'électrode de source est connectée à la masse électrique (23) et l'électrode de grille (24) est connectée au port de sortie (26) du micro contrôleur (16), **en ce que** les résistances (18-20) sont connectées chacune à un port de sortie déterminé du groupe de ports de sortie (25) du micro contrôleur 16 tandis que la résistance (17) est connectée à plusieurs ports de sortie déterminés du groupe de ports de sortie (25) de manière à bénéficier d'une capacité de courant supplémentaire par rapport aux autres résistances.

14. Dispositif selon l'une quelconque des revendications 5 à 13, **caractérisé en ce qu'**il coopère avec un dispositif de communication et des moyens de communication infrarouge bidirectionnelle (47, 48), le dispositif de communication comportant un micro contrôleur (42) et d'un circuit d'interfaçage (44) qui est connecté par une voie sortante du micro contrôleur (42) à un port d'émission série asynchrone TX du micro contrôleur et par une voie entrante du micro contrôleur (42) à un port de réception série asynchrone RX une ligne commune de réception étant montée en collecteur ouvert avec la sortie de réception de chacun des modules récepteurs-émetteurs transmise à cette ligne par un circuit d'adaptation (34-37 et 45, 46) de type « buffer » en collecteur ouvert.

15. Dispositif selon l'une quelconque des revendications 5 à 14, **caractérisé en ce que** le microcontrôleur utilise le signal de réception de mot RXINT de son UART (87, Figure 9), activé lors de la réception des premiers mots dans la trame du protocole de communication, pour exécuter un interruption logicielle qui estime les instants d'apparition des différents bits du mot de localisation Loc de façon à faire l'acquisition en correspondance de l'état des récepteurs à chacun de ces instants.

16. Système de communication mobile **caractérisé en ce qu'**il comporte une pluralité de robots communicants mobiles, dont au moins un est équipé d'un dispositif de localisation selon l'une quelconque des revendications 5 à 15.

## Patentansprüche

1. Verfahren zur Lokalisierung einer optischen Strahlungsquelle, wobei Empfänger verwendet werden, die im Ein-Aus-Betrieb wie Infrarotempfänger arbeiten, **dadurch gekennzeichnet, dass** es darin besteht:
- mindestens einen optischen Strahlungsempfänger an einem Punkt anzuordnen, dessen Position lokalisiert werden soll, wobei die Empfänger so angeordnet sind, dass sie unterschiedliche Zonen des Raums unterscheiden, in dem sich mindestens ein bestimmter optischer Strahler befindet;
- die Emission des Strahlers so zu steuern, dass eine Wiederholung von Impulsen bestimmter Sendeleistungen erzeugt wird;
- den dem Empfänger zugeordneten Punkt zu lokalisieren, indem der Zustand des Empfängers oder der Empfänger als Antwort auf die Wiederholung von Impulsen bestimmter Leistungen erfasst wird.

2. Verfahren nach Anspruch 1, **dadurch gekennzeichnet, dass** die Emission der Lokalisierungsquelle gemäß einem bestimmten Gesetz abnehmender Leistungen moduliert wird, und dass die Lokalisierung auf der Basis des Zustands des oder der Empfänger bestimmt wird, die auf die schwächste empfangene Leistung reagieren.

3. Verfahren nach einem der Ansprüche 1 oder 2, **dadurch gekennzeichnet, dass** die Wiederholung von Impulsen bestimmter Leistungen in Form von Rahmen bestimmter Leistungen erzeugt wird.

4. Verfahren nach einem der Ansprüche 1 oder 2, **dadurch gekennzeichnet, dass** die Wiederholung von Impulsen bestimmter Leistungen in Form eines Binärworts (Loc) in einem Mehrfachwortrahmen (Id, Dest, Act) eines Mehrfachrahmen-Kommunikationsprotokolls generiert wird.

5. Lokalisierungsvorrichtung, die eine Vielzahl (1-4) von im Ein-Aus-Betrieb arbeitenden Infrarotwellen-Detektoren aufweist, wobei jeder Detektor in einen Infrarotwellen absorbierenden Träger eingefügt ist, der die von möglichen Kommunikationsquellen ausgehend von einem bestimmten geometrischen Sektor kommenden Infrarotstrahlungen durchlässt, **dadurch gekennzeichnet, dass** sie eine Einrichtung aufweist, an deren Eingang die formatierten Signale der Detektoren geliefert werden, um den Kanal des oder der gegenüber mindestens einer eine Wiederholung von Impulsen erzeugenden Kommunikationsquelle angeordneten Empfänger von von der bestimmten Kommunikationsquelle erzeugten bestimmten Leistungen zu bestimmen.

6. Vorrichtung nach Anspruch 5, **dadurch gekennzeichnet, dass** sie eine Verteilung von mehreren Empfängern in durch Wände getrennten Zonen aufweist, um die sendende Kommunikationsquelle in einer Zone des Raums zu lokalisieren, wobei die Leistungsschwankung des Senders bestimmt wird, um einen Kontrastfaktor zu erzeugen.

7. Vorrichtung nach Anspruch 5, **dadurch gekennzeichnet, dass** sie eine Einrichtung zur Ausführung einer der Decodierung zugeordneten Kalibrierung aufweist, die mit einer Einrichtung zur Schätzung der Entfernung/Nähe zwischen dem Sender einer Kommunikationsquelle und einem Empfänger zusammenwirkt.

8. Vorrichtung nach Anspruch 5, **dadurch gekennzeichnet, dass** sie eine Einrichtung zur Erfassung eines Hindernisses aufweist, die mit einer Einrichtung zur Erzeugung einer Abfragewelle und mit einer Einrichtung zur Lokalisierung der Abfragewelle oder der Reflektion der Abfragewelle durch das Hindernis zusammenwirkt.

9. Vorrichtung nach einem der Ansprüche 5 bis 8, **dadurch gekennzeichnet, dass** sie eine Positionierung des Senders und des Empfängers auf dem gleichen mobilen kommunizierenden Roboter mit Trennung durch eine Trennwand aufweist, um die Erfassung der Reflektion der Emission und die Schätzung der Leistung dieser Reflektion zu ermöglichen.

10. Vorrichtung nach einem der Ansprüche 5 bis 9, **dadurch gekennzeichnet, dass** sie eine Erfassungsschaltung (10), deren Eingangsklemmen elektrisch mit den verschiedenen Sensoren (1-4) verbunden sind, und Formatierungseinrichtungen der von jedem Sensor empfangenen elektrischen Signale aufweist, die mit Einrichtungen verbunden sind, um den Kanal des Sensors zu erfassen, der gegenüber mindestens einer Kommunikationsquelle angeordnet ist, und dass Kennungen des erfassten Kanals dann am Ausgang der Erfassungsschaltung (10) an eine Schaltung (11) übertragen werden, um die Kennungen des Sektors zu speichern, in dem die Kommunikationsquelle vom erfassten Kanal erfasst wurde.

11. Vorrichtung nach Anspruch 10, **dadurch gekennzeichnet, dass** der Kanal des gegenüber einer Kommunikationsquelle angeordneten Sensors auf der Basis der niedrigsten erfassten Leistung und auf der Basis mindestens einer Kommunikationsquelle erfasst wird, die eine Wiederholung von Impulsen und/oder von Rahmen gestrahlter Energie gemäß einer gemäß einem bestimmten Abnahmegesetz abnehmenden Energie erzeugt.

12. Vorrichtung nach Anspruch 11, **dadurch gekennzeichnet, dass** das Abnahmegesetz vom Exponentialtyp ist, wobei jeder Impuls (pᵢ) und/oder Rahmen (ti) während einer bestimmten Dauer (DT) eine bestimmte Amplitude (ai) aufweist und vom folgenden Rahmen (ti+1) durch eine bestimmte Dauer (DR) getrennt ist.

13. Vorrichtung nach Anspruch 12, **dadurch gekennzeichnet, dass** die für eine Lokalisierungsvorrichtung geeignete Kommunikationsquelle einen Mikrocontroller (16) aufweist, der eine Einrichtung zur Ausführung eines Programms aufweist, um eine Folge von Anweisungen zu erzeugen, die einen ersten Ausgangsanschluss (26) des Mikrocontrollers (16), um den Betrieb eines aktiven Schalters (22) zu steuern, und eine zweite Gruppe von Ausgangsanschlüssen (25) aktivieren können, die mit einem Netz von Widerständen (17-20) verbunden sind, der so berechnet ist, dass er eine Impuls- und/oder Rahmenamplitude gemäß einem exponentiellen Abnahmegesetz erzeugt, und dass der gemeinsame Punkt des Netzes (17-20) mit der Anode einer eine Infrarotwelle emittierenden Diode (21) verbunden ist, deren Kathode mit der Drainelektrode des Schalters (22) verbunden ist, deren Sourceelektrode mit der elektrischen Masse (23) verbunden ist, und die Gateelektrode (24) mit dem Ausgangsanschluss (26) des Mikrocontrollers (16) verbunden ist, dass die Widerstände (18-20) je mit einem bestimmten Ausgangsanschluss der Gruppe von Ausgangsanschlüssen (25) des Mikrocontrollers (16) verbunden sind, während der Widerstand (17) mit mehreren bestimmten Ausgangsanschlüssen der Gruppe von Ausgangsanschlüssen (25) verbunden ist, um von einer zusätzlichen Stromstärke im Vergleich mit den anderen Widerständen zu profitieren.

14. Vorrichtung nach einem der Ansprüche 5 bis 13, **dadurch gekennzeichnet, dass** sie mit einer Kommunikationsvorrichtung und mit bidirektionalen Infrarotkommunikationseinrichtungen (47, 48) zusammenwirkt, wobei die Kommunikationsvorrichtung einen Mikrocontroller (42) und eine Schnittstellenschaltung (44) aufweist, die über einen ausgehenden Kanal des Mikrocontrollers (42) mit einem asynchronen seriellen TX-Sendeanschluss des Mikrocontrollers und über einen eingehenden Kanal des Mikrocontrollers (42) mit einem asynchronen seriellen RX-Empfangsanschluss verbunden ist, wobei eine gemeinsame Empfangsleitung als Open-Collector montiert ist, wobei der Empfangsausgang jedes der Empfänger-Sender-Module an diese Leitung von einer Anpassungsschaltung (34-37 und 45, 46) vom "Buffer"-Typ als Open-Collector übertragen wird.

15. Vorrichtung nach einem der Ansprüche 5 bis 14, **dadurch gekennzeichnet, dass** der Mikrokontroller das Wortempfangssignal RXINT seines UART (87, Figur 9), das beim Empfang der ersten Wörter im Rahmen des Kommunikationsprotokolls aktiviert wird, verwendet, um eine Softwareunterbrechung auszuführen, die die Zeitpunkte des Auftretens der verschiedenen Bits des Lokalisierungsworts Loc schätzt, um die Erfassung entsprechend dem Zustand der Empfänger zu jedem dieser Zeitpunkte durchzuführen.

16. Mobiles Kommunikationssystem, **dadurch gekennzeichnet, dass** es eine Vielzahl von mobilen kommunizierenden Robotern aufweist, von denen mindestens einer mit einer Lokalisierungsvorrichtung nach einem der Ansprüche 5 bis 15 ausgestattet ist.

## Claims

1. Method for locating an optical radiation source in which receivers like infrared receivers are used in an on/off mode, **characterized in that** it consists in:
- arranging at least one receiver of optical radiation at a point for which localization is sought, the receivers being arranged in order to discriminate separate zones or sectors in a space in which at least one determined transmitter of an optical radiation source is present;
- driving the transmitting emission from said transmitter in order to provide a recurrence of pulses having determined emission powers;
- locating the point associated with the receiver by detecting the state of the receiver or the receivers in response to the said recurrence of pulses having determined emission powers.

2. Method according to claim 1, **characterized in that** the transmitting emission from said transmitter is modulated according to a law of predetermined decreasing powers, and **in that** the localization is determined on the basis of the state of receivers which react to the lowest received power.

3. Method according to any of claims 1 or 2, **characterized in that** said recurrence of pulses of determined powers is generated in the form of frames of determined powers.

4. Method according to any of claims 1 or 2, **characterized in that** said recurrence of pulses of determined powers is generated in the form of a binary location word (Loc) in a multiword frame (Id, Dest, Act) in a multiframe communication protocol.

5. Device for locating a communication source having a plurality (1-4) of detectors of infrared waves in an on/off mode, each detector being inserted in a support absorbing the infrared waves and leaving the infrared rays coming from possible communication sources in a determined geometric sector or zone, **characterized in that** it comprises a means, at the input of which are provided the shaped signals from the other detectors, for determining a channel of receiver, or of the receivers, located in view of at least a communication source generating a recurrence of pulses, having given powers.

6. Device according to claim 5, **characterized in that** it presents a distribution of several receivers in zones separated by walls in order to locate a transmitting communication source in a geometric sector of the space, the determined variation of powers of the transmitting communication source providing a factor of contrast.

7. Device according to claim 5, **characterized in that** it comprises a means for carrying out a calibration associated with the decoding which cooperates with a means for estimating the distance/proximity between the transmitting communication source and a receiver.

8. Device according to claim 5, **characterized in that** it comprises a means for detecting an obstacle which cooperates with a means for providing an interrogation wave and with a means for locating the interrogation wave or its reflection by an obstacle.

9. Device according to any of claims 5 to 8, **characterized in that** a transmitting communication source and a receiver are provided on a same mobile communicating robot with separation by a partition in order to permit the detection of the reflection of the emission and to estimate the power of this reflection.

10. Device according to any of claims 5 to 9, **characterized in that** it comprises a detection circuit (10) the input terminals of which are electrically connected to the different sensors (1-4), means for shaping the electrical signals received from each sensor which are connected to a means for detecting a channel of the sensor placed in view of sight of at least a communication source, and **in that** identifiers of the detected channel are then transmitted at the output of the detection circuit (10) to a circuit (11) for memorizing the identifiers of the sector of the space in which the communication source has been detected by the detected channel.

11. Device according to claim 10, **characterized in that** the channel of the sensor located in the line of sight of a communication source is detected on the basis of the lowest detected power and on the basis of at least the one communication source producing a recurrence of pulses and/or frames of radiating powers according to a decreasing power having a given decay law.

12. Device according to clam 11, **characterized in that** the said given decay law is of the exponential type, each pulse (pᵢ) and/or frame (ti) having a determined amplitude (ai) during a determined duration (DT), and is separated from the next frame (ti+ 1) with a given duration (DR).

13. Device according to claim 12, **characterized in that** the communication source adapted to a locating device comprises a micro controller (16) which includes a means for running a program to generate a sequence of instructions capable to activate a first output port (26) of the micro controller (16) to control the operation of an active switch (22), and a second group of output ports (25) which are connected to a network of resistors (17-20), designed to produce an amplitude of pulses and/or frames according to a law of exponential decay and **in that** the common point of the network (17-20) is connected to the anode of a diode transmitting an infrared wave (21) the cathode of which is connected to the electrode of drain of the switch (22), the electrode of source of which is connected to the electrical ground (23) and the electrode of gate (24) is connected to the output port (26) of the micro controller (16), **in that** the resistors (18-20) are connected each one to a determined output port of the group of output ports (25) of the micro controller (16), and **in that** the resistor (17) is connected to several output ports of the group of output ports (25) to provide a quantity of additional current when compared to the other resistors.

14. Device according to any of claims 5 to 13, **characterized in that** it cooperates with a communicating device and with bidirectional infrared means (47, 48), the communicating device comprising a micro controller (42) and an interfacing circuit (44) which is connected by an outgoing way of the micro controller (42) to a TX asynchronous series emitting port of the micro controller and by an incoming way of the micro controller (42) to an RX asynchronous series receiving port, a common receiving line being mounted out of open collector, the receiving output of each receiver-transmitter module being transmitted to this line by a matching circuit (34-37 and 45, 46) of "open collector type" buffer.

15. Device according to any of claims 5 to 14, **characterized in that** the micro controller uses a RXINT receiving word signal on its UART module (87, Figure 9), activated at the time of the reception of the first words in the frame of a communication protocol, to carry out a software interruption to estimate the time of occurrences of different bits of a location word Loc in order to do the acquisition in correspondence of the state of the receivers to each one of these times of occurrence.

16. Communication system **characterized in that** it comprises a plurality of mobile communicating robots, at least one of which is equipped with a locating device according to anyone of the claims 5 to 15.
